# EUROPÄISCHE PATENTSCHRIFT

(11) **EP 0 790 213 B1**
(45) Veröffentlichungstag und Bekanntmachung des Hinweises auf die Patenterteilung: **05.12.2001**
(21) Anmeldenummer: 97102293.4
(22) Anmeldetag: 13.02.1997
(51) Int. Cl.: C01B 33/18

(54) **Verfahren zur Herstellung von Siliciumdioxid**
Process for the preparation of silica
Procédé de préparation de silice

(30) Priorität: 15.02.1996 DE 19605672
(43) Veröffentlichungstag der Anmeldung: 20.08.1997
(73) Patentinhaber: Wacker-Chemie GmbH, 81737 München (DE)
(72) Erfinder: Mühlhofer, Ernst, Dr., 87477 Sulzberg im Allgäu (DE); Kalchgruber, Gerhard, 84489 Burghausen (DE); Ehrke, Carl-Heinz, 84577 Tuessling (DE); Druse, Botho, 84489 Burghausen (DE)

(56) Entgegenhaltungen:
- EP-A- 0 634 360
- EP-A- 0 706 972
- FR-A- 2 351 052
- FR-A- 2 451 343
- US-A- 5 340 560

## Beschreibung

Gegenstand der Erfindung ist ein Verfahren zur Herstellung von hochdispersem Siliciumdioxid durch Verbrennen von Organochlorsilicium-Verbindungen.

In der DE-26 20 737 C2 ist ein Verfahren beschrieben worden, nach dem hochdisperses Siliciumdioxid von hoher chemischer Reinheit durch Verbrennen von Organochlorsilan-Verbindungen in Gegenwart von Luftsauerstoff und einem brennbaren Gas hergestellt werden kann. Die verwendeten Organochlorsilane liegen in Form einer verdampfbaren Flüsssigkeit vor, die eine oder mehrere der reinen Organochlorsilan-Verbindungen umfaßt. Eine Verwendung von Flüssigkeiten, die neben einer Organochlorsilan-Verbindung auch Kohlenwasserstoffe enthalten, ist in der Patentschrift nicht beschrieben. Eine derartige Verwendung ist auch nicht naheliegend, weil gemäß der Patentschrift "mit Organosilanen im allgemeinen nur dunkle, durch Kohlenstoff verunreinigte Produkte erzielt werden". Für den Verbrennungsvorgang wird die Flüssigkeit verdampft und der Dampf mit den übrigen, an der Verbrennung beteiligten Gasen gemischt.

Gemäß der Offenlegungsschrift DE-29 09 815 ist es auch möglich, gasförmige oder verdampfbare Siliciumverbindungen zu hochdispersem Siliciumdioxid zu verbrennen, die bisher keiner wirtschaftlichen Verwendung zugeführt werden konnten. Als Beispiel werden kohlenwasserstoffhaltige Nebenprodukte genannt, die bei der destillativen Trennung der Produkte aus der Umsetzung von Silicium oder Siliciumlegierungen mit Organohalogeniden oder Chlorwasserstoff als Vor- und Nachlauf anfallen. Bei der Verbrennung wird auf den Zusatz eines brennbaren Gases verzichtet und stattdessen Wasserdampf dem zur Verbrennung vorgesehenen Gasgemisch zugeführt. Es hat sich jedoch herausgestellt, daß dieses Verfahren für den industriellen Einsatz kaum geeignet ist, weil ein Teil des Organochlorsilans vorzeitig mit Wasserdampf zu hydrolysierter Kieselsäure abreagiert, die in kurzer Zeit die Zuführungsrohre zur Brennkammer verstopft und deren Entfernen erhebliche Sicherheitsprobleme mit sich bringt.

Aufgabe der vorliegenden Erfindung ist es, eine zufriedenstellende Lösung zu finden, um aus kohlenwasserstoffhaltigen Nebenprodukten von Chlorsilan-Synthesen industriell verwertbares, hochdisperses Siliciumdioxid herstellen zu können.

Gelöst wird die Aufgabe durch ein Verfahren zur Herstellung von hochdispersem Siliciumdioxid durch Verbrennen von Organochlorsilicium-Verbindungen in Gegenwart eines sauerstoffhaltigen Gases ohne Zuführung von Wasser in einem Brenner, das dadurch gekennzeichnet ist, daß eine Flüssigkeit in den Brenner überführt wird, die mindestens eine Kohlenwasserstoff-Verbindung in einer Menge von bis zu 30 Gew.-% und mindestens eine Organochlorsilicium-Verbindung enthält und die bei der destillativen Reinigung von Produkten von Chlorsilan-Synthesen als Nebenprodukt in Form eines niedrig siedenden Vorlaufs oder eines hoch siedenden Nachlaufs anfällt.

Nebenprodukte von Chlorsilan-Synthesen fallen bei der destillativen Reinigung der Zielprodukte als niedrigsiedender Vorlauf und hochsiedender Nachlauf in großen Mengen an und wurden bisher überwiegend entweder hydrolysiert und deponiert oder in einer Müllverbrennungsanlage verbrannt, wobei dann die Verbrennungsrückstände zu deponieren waren.

Die Erfindung erschließt für diese Nebenprodukte eine wirtschaftliche Verwendungsmöglichkeit.

Ein besonderer Vorteil des erfindungsgemäßen Verfahrens ergibt sich daraus, daß der Nachlauf und der Vorlauf und auch beliebige Mischungen von Vor- und Nachlauf zur Herstellung von hochdispersem Siliciumdioxid verwendet werden können. Es handelt sich dabei in der Regel um Flüssigkeiten, die verschiedene Kohlenwasserstoffe und Organochlorsilane, sowie gegebenenfalls auch Chlorsilane, Chlorsiloxane, Organochlorsiloxane, Organosilane und Organosiloxane enthalten. Zur Durchführung der Erfindung ist jedoch nur zwingend notwendig, daß eine Flüssigkeit verwendet wird, die mindestens eine Kohlenwasserstoff-Verbindung und mindestens eine Organochlorsilicium-Verbindung enthält.

Als Organochlorsilicium-Verbindungen kommen vorzugsweise Verbindungen in Betracht, die eine der drei nachfolgend angegebenen Formeln aufweisen :
a) RₙSiCl₄₋ₙ, wobei n eine ganze Zahl von 1 bis 3 ist;
b) RₙCl₃₋ₙSiSiRₘCl₃₋ₘ, wobei n eine ganze Zahl von 0 bis 3 und m eine ganze Zahl von 0 bis 3 ist, und ausgenommen ist, daß m=n=0 oder m=n=3 ist;
c) RₙCl₃₋ₙSiOSiRₘCl₃₋ₘ, wobei n eine ganze Zahl von 0 bis 3 und m eine ganze Zahl von 0 bis 3 ist, und ausgenommen ist, daß m=n=0 ist oder m=n=3 ist.

In den Formeln bedeutet R einen Wasserstoff- oder einen aliphatischen oder aromatischen Kohlenwasserstoff-Rest, vorzugsweise einen Rest aus einer Gruppe, die Wasserstoff-, Methyl-, Ethyl-, Propyl-, Vinyl-, Isooctyl- und Phenylreste umfaßt.

Der Anteil der Kohlenwasserstoff-Verbindung in der Flüssigkeit kann bis zu 30 Gew.-% betragen.

Gemäß einer ersten Ausführungsform der Erfindung, die vorzugsweise bei Organochlorsilicium-Verbindungen enthaltenden Flüssigkeiten mit einem Siedebereich von 130 bis 180 °C eingesetzt wird, wird die Flüssigkeit in einem Verdampfer verdampft und der erzeugte Dampf mit einem sauerstoffhaltigen Gas und gegebenenfalls mit Wasserstoff, Methan, Propan oder einem anderen Gas, das in Gegenwart von Sauerstoff unter Bildung von Wasser verbrennt, vermischt und in einem Brenner verbrannt. Der Zusatz von Wasser ist zu unterlassen. Die Flüssigkeit wird vorzugsweise bei geregeltem Füllstand des Verdampfers, bei konstant gehaltenem Dampfdruck und bei konstant gehaltener Dampftemperatur verdampft. Die bei der Verbrennung entstehende Wärme wird durch eine Zwangskühlung abgeführt. Die Temperatur des erzeugten Dampfes sollte beim Eintritt in den Brenner vorzugsweise über, jedoch nicht wesentlich unter dem Kochpunkt der Flüssigkeit liegen. Es ist zweckmäßig, die Gase, die dem Organochlorsilicium-Verbindungen enthaltenden Dampf vor der Verbrennung zugemischt werden, soweit vorzuerhitzen, daß ein Kondensieren des Dampfes ausgeschlossen ist. Als sauerstoffhaltige Gase im Sinne der Erfindung eignen sich Gase, die molekularen Sauerstoff mit einem Anteil von mindestens 15 Vol.-% enthalten, insbesondere Sauerstoff und Luft. Es wirkt sich besonders vorteilhaft auf die Qualität des erzeugten Siliciumdioxids aus, wenn der Organochlorsilicium-Verbindungen enthaltende Dampf und das sauerstoffhaltige Gas vor der Verbrennung intensiv vermischt werden, beispielsweise in einer mit speziellen Einbauten versehenen Mischstrecke. Das sauerstoffhaltige Gas sollte sorgfältig getrocknet sein, bevor es dem Organochlorsilicium-Verbindungen enthaltenden Dampf zugemischt wird. Diese Maßnahme verhindert die Bildung eines störenden Belags in den Gaszuleitungen zum Brenner und im Bereich der Brennerdüse.

Die Verbrennung des Gasgemisches erfolgt vorzugsweise auf die, in der DE-26 20 737 C2 beschriebenen Weise und unter Verwendung eines in diesem Dokument beschriebenen, zwangsgekühlten Brenners mit konusartiger Austrittsöffnung und Ringspüldüse.

Das als Produkt erhaltene Siliciumdioxid weist eine hohe BET-Oberfläche von 50 bis 500 m²/g auf und ist frei von färbenden Verunreinigungen.

Gemäß einer zweiten Ausführungsform der Erfindung, die eingesetzt werden kann, wenn der Siedebereich der Flüssigkeit über 130 °C liegt, wird die Flüssigkeit durch eine Düse in einen Brennner eingespritzt und gleichzeitig das sauerstoffhaltige Gas und gegebenenfalls ein Gas, das in Gegenwart von Sauerstoff unter Bildung von Wasser verbrennt, dem Brenner zugeführt. Diese Vorgehensweise hat den Vorteil, daß auch Flüssigkeiten, die nicht oder nur schwer verdampfbar sind, verwendet werden können.

Zur Dosierung der zu verbrennenden Komponenten wird vorzugsweise ein Regelkreis eingerichtet, wobei der gemessene Restsauerstoff-Gehalt im Rauchgas als Leitgröße verwendet wird. Wandert der gemessene Wert aus einem vorgegebenen Toleranzbereich, wird das Mischungsverhältnis "Organochlorsilicium-Verbindung-Kohlenwasserstoff-Edukt/sauerstoffhaltiges Gas/unter Wasserbildung verbrennendes Gas" verändert, bis der Meßwert wieder im Toleranzbereich liegt. Auf diese Weise ist sichergestellt, daß das Verfahren Siliciumdioxid mit gleichbleibender Produktqualität liefert. In einer Weiterentwicklung des Verfahrens ist zusätzlich vorgesehen, das Konzentrationsverhältnis "Silan-Verbindungen/Kohlenwasserstoffe" in der Flüssigkeit festzustellen und gegebenenfalls durch Zudosierung weiterer Kohlenwasserstoffe oder Organochlorsilicium-Verbindung enthaltender Rückstände zu verändern. Ziel dieser Eduktkonditionierung ist ebenfalls die Beibehaltung einer gleichbleibenden Produktqualität.

### Beispiel 1)

Eine Menge von 21 t des Dampfes (Betriebsdruck 1,8 bar) eines bei etwa 130 °C siedenden Organochlorsilicium-Verbindungen enthaltenden Gemisches wurde nach dem erfindungsgemäßen Verfahren in einem aus der Patentschrift DE-26 20 737 C2 bekannten Brenner in Gegenwart von Luft und Wasserstoff zu hochdispersem Siliciumdioxid verbrannt. Bei dem flüssigen Gemisch handelte es sich um den Nachlauf der Destillation von Produkten von Chlorsilan-Synthesen. Die Flüssigkeit wies die folgende Zusammensetzung auf:
55 Gew.-% CH₃HSiCl₂
5 Gew.-% einer Mischung von CH₃SiCl₃ und (CH₃)₂SiCl₂
30 Gew.-% einer Mischung von Trimethyl- und Dimethylchlordisilanen. Der Rest bestand aus Kohlenwasserstoffen, verschiedenen anderen Organosilanen und Organosiloxanen.

Bei der Verbrennung von 235 kg/h des Dampfes in Gegenwart von 1480 Nm³/h Luft und 100 Nm³/h Wasserstoff entstand Siliciumdioxid mit einer BET-Oberfläche von 370 m²/g.

### Beispiel 2)

In einem weiteren Versuch wurde eine Organochlorsilicium-Verbindungen und Kohlenwasserstoffe enthaltende Flüssigkeit eingesetzt, die bei etwa 120 °C siedete und durch Vermengen des Vorlaufs und des Nachlaufs einer Destillation von Produkten von Chlorsilan-Synthesen gewonnen worden war. Die Mischung enthielt in Mengen von jeweils 5 bis 15 Gew.-% (CH₃)₄Si, (CH₃)₂HSiCl, HSiCl₃, (CH₃)₃SiCl, SiCl₄, (CH₃)₂SiCl₂, CH₃SiCl₃, CH₃C₂H₅SiCl₂, Disilane mit der Formel RₙCl₃₋ₙSiSiRₘCl₃₋ₘ, wobei R Methylreste waren und die Summe n+m einer ganzen Zahl von 2 bis 6 entsprach, und etwa 15 Gew.-% von Kohlenwasserstoffen und verschiedenen, anderen Silanverbindungen. Der Druck des erzeugten Dampfes betrug 1,8 bar.

Bei der Verbrennung einer Mischung von 165 kg/h des durch Verdampfen der Flüssigkeit erzeugten Dampfes in Gegenwart von 1490 Nm³/h Luft und 150 Nm³/h Wasserstoff entstand Siliciumdioxid mit einer BET-Oberfläche von 230 m²/g.

### Beispiel 3)

In einem weiteren Versuch erfolgte die Verbrennung unter gleichen Bedingungen wie in Beispiel 1, mit dem Unterschied, daß in der Flüssigkeit CH₃HSiCl₂ durch CH₃SiCl₃ ersetzt war.

Bei der Verbrennung einer Mischung von 600 kg/h des durch Verdampfen der Flüssigkeit erzeugten Dampfes in Gegenwart von 1600 Nm³/h Luft und 200 Nm³/h Wasserstoff entstand Siliciumdioxid mit einer BET-Oberfläche von 191 m²/g.

## Patentansprüche

1. Verfahren zur Herstellung von hochdispersem Siliciumdioxid durch Verbrennen von Organochlorsilicium-Verbindungen in Gegenwart eines sauerstoffhaltigen Gases ohne Zuführung von Wasser in einem Brenner, das **dadurch gekennzeichnet ist, daß** eine Flüssigkeit in den Brenner überführt wird, die mindestens eine Kohlenwasserstoff-Verbindung in einer Menge von bis zu 30 Gew.-% und mindestens eine Organochlorsilicium-Verbindung enthält und die bei der destillativen Reinigung von Produkten von Chlorsilan-Synthesen als Nebenprodukt in Form eines niedrig siedenden Vorlaufs oder eines hoch siedenden Nachlaufs anfällt.

2. Verfahren nach Anspruch 1, **dadurch gekennzeichnet, daß** die Flüssigkeit außerhalb des Brenners verdampft wird und der entstehende Dampf dem Brenner zugeführt wird.

3. Verfahren nach Anspruch 1, **dadurch gekennzeichnet, daß** die Flüssigkeit durch eine Düse in den Brenner eingespritzt wird.

4. Verfahren nach einem der Ansprüche 1 bis 3, **dadurch gekennzeichnet, daß** das sauerstoffhaltige Gas vor seiner Zuführung in den Brenner getrocknet und vorerhitzt wird.

5. Verfahren nach einem der Ansprüche 1 bis 4, **dadurch gekennzeichnet, daß** dem Brenner zusätzlich ein Gas zugeführt wird, das in Gegenwart von Sauerstoff unter Wasserbildung verbrennt.

## Claims

1. Process for preparing highly disperse silicon dioxide by combustion of organochlorosilicon compounds in a burner in the presence of an oxygen-containing gas without supply of water, which is **characterized in that** a liquid which contains at least one hydrocarbon compound in an amount of up to 30% by weight and at least one organochlorosilicon compound and which arises during the purification by distillation of products of chlorosilane syntheses as a by-product in the form of low-boiling first runnings or high-boiling tailings, is transported into the burner.

2. Process according to Claim 1, **characterized in that** the liquid is vaporized outside the burner and the resulting vapour is fed to the burner.

3. Process according to Claim 1, **characterized in that** the liquid is injected through a nozzle into the burner.

4. Process according to one of Claims 1 to 3, **characterized in that** the oxygen-containing gas is dried and preheated before it is fed into the burner.

5. Process according to one of Claims 1 to 4, **characterized in that** a gas which burns in the presence of oxygen with the formation of water is additionally fed to the burner.

## Revendications

1. Procédé pour la préparation de silice hautement dispersée, par combustion de composés organochlorosiliciés, en présence d'un gaz contenant de l'oxygène, sans apport d'eau, dans un brûleur, **caractérisé en ce qu'**on envoie dans le brûleur un liquide qui contient au moins un composé hydrocarboné en une quantité allant jusqu'à 30 % en poids et au moins un composé organochlorosilicié et qui est formé en tant que sous-produit dans la purification par distillation de produits de synthèse de chlorosilanes, sous forme d'une fraction de tête à bas point d'ébullition ou d'une fraction de queue à haut point d'ébullition.

2. Procédé selon la revendication 1, **caractérisé en ce que** le liquide est vaporisé à l'extérieur du brûleur et la vapeur résultante est envoyée au brûleur.

3. Procédé selon la revendication 1, **caractérisé en ce que** le liquide est injecté par un injecteur dans le brûleur.

4. Procédé selon l'une quelconque des revendications 1 à 3, **caractérisé en ce que** le gaz contenant de l'oxygène est séché et préchauffé avant son introduction dans le brûleur.

5. Procédé selon l'une quelconque des revendications 1 à 4, **caractérisé en ce qu'**on envoie en plus au brûleur un gaz qui brûle en présence d'oxygène, avec formation d'eau.
